# EUROPÄISCHE PATENTSCHRIFT

(11) **EP 0 966 625 B1**
(45) Veröffentlichungstag und Bekanntmachung des Hinweises auf die Patenterteilung: **05.09.2001**
(21) Anmeldenummer: 97918023.9
(22) Anmeldetag: 10.03.1997
(51) Int. Cl.: F16G 15/02

(54) **KETTENSCHLOSS**
CHAIN JOINT
JOINT DE CHAINE

(43) Veröffentlichungstag der Anmeldung: 29.12.1999
(73) Patentinhaber: RUD-KETTENFABRIK RIEGER & DIETZ GMBH U. CO., 73432 Aalen-Unterkochen (DE)
(72) Erfinder: DALFERTH, Hans, D-73433 Aalen (DE); BAUER, Hans, D-73433 Aalen (DE)
(74) Vertreter: Böning, Manfred, Prof.Dr.-Ing.
(86) Internationale Anmeldenummer: DE9700514
(87) Internationale Veröffentlichungsnummer: WO9840646

(56) Entgegenhaltungen:
- DE-A- 3 207 629
- DE-C- 4 333 261
- US-A- 2 819 586

## Beschreibung

Die Erfindung betrifft ein Kettenschloß für Gliederketten mit zwei lösbar miteinander verbundenen im wesentlichen U-förmigen Schloßteilen, die jeweils einen Innenschenkel und einen mit diesem über ein Joch verbundenen Außenschenkel aufweisen, wobei in der Schließstellung des Schlosses die einander zugewandten Seiten der Innen- und Außenschenkel durch jeweils drei Haltezahnpaare miteinander verbunden sind und im Bereich der kräftiger als die übrigen Haltezähne ausgebildeten Haltezähne der mittleren Haltezahnpaare zwischen den einander zugewandten Seiten der Innenschenkel ein Stütz- und Verriegelungselement für die Schloßteile angeordnet ist.

Ein Kettenschloß der vorstehenden Art ist bezüglich seines grundsätzlichen Aufbaues aus der DE 32 07 629 C2 bekannt. Das bekannte Kettenschloß zeichnet sich durch eine günstige Verteilung der zu übertragenden Kräfte auf die verschiedenen Haltezahnpaare aus. Ungeachtet seiner vorteilhaften Ausbildung sind die mit dem bekannten Schloß erzielbaren Festigkeitswerte nach wie vor spürbar kleiner als die Festigkeitswerte, über die die Glieder der zu verbindenden Kettenstränge verfügen. In dem Bestreben, die Festigkeitswerte des Schlosses an die Festigkeitswerte von Kettengliedern gleicher Güteklasse anzunähern, wurden verschiedene Wege eingeschlagen. Eine der Verbesserungsmöglichkeiten ist aus der den Obergebriff des Anspruchs 1 bilden den DE 43 33 261 C1 bekannt, sie besteht darin, den Bereich des Überganges zwischen den Zahnflanken und den Zahnlücken der Schloßteile mit Hilfe eines Druck- oder Schlagwerkzeuges plastisch zu verformen, um auf diese Weise im genannten Bereich von Haus aus auftretende kritische Zug-Normalspannungen zwecks Erhöhung der dynamischen Festigkeit durch Druckspannungen weitgehend zu kompensieren.

Der Erfindung liegt die Aufgabe zugrunde, die Festigkeit des gattungsgemäßen Kettenschlosses durch geeignete Maßnahmen im Sinne einer Optimierung weiter zu steigern, um die Standzeiten von Schloß und Ketten noch stärker als bisher aneinander anzugleichen und so insbesondere Forderungen des Untertagebaues nach der Reduzierung der Häufigkeit eines Austausches von Kettenschlössern in hoch beanspruchten Antriebsketten unter schwierigen Bedingungen Rechnung zu tragen.

Gelöst wird die gestellte Aufgabe durch die Kombination der Merkmale des Ausprüchs 1.

Durch die vorgeschlagenen Höhenverhältnisse wird erreicht, daß ein Verschleiß der Außenschenkel des Schlosses weniger schnell als bisher zu einer Schwächung der Schloßfestigkeit führt. Die Ausgestaltung der Anlageverhältnisse zwischen den Flanken der Haltezähne bewirkt eine günstigere Spannungsverteilung im Schloß und dies insbesondere im Falle starker Belastungen.

Weitere Einzelheiten und Merkmale der Erfindung ergeben sich aus den Unteransprüchen und der nachstehenden Beschreibung einer in der beigefügten Zeichnung dargestellten Ausführungsform. Es zeigen
Fig. 1 die Draufsicht auf ein Kettenschloß,
Fig. 2 die Seitenansicht des Kettenschlosses gemäß Fig. 1,
Fig. 3 einen Schnitt längs der Linie III-III in Fig. 1 und
Fig. 4 in vergrößertem Maßstab die Anlageverhältnisse zweier Zahnflanken im Bereich des Kreises IV in Fig. 1.

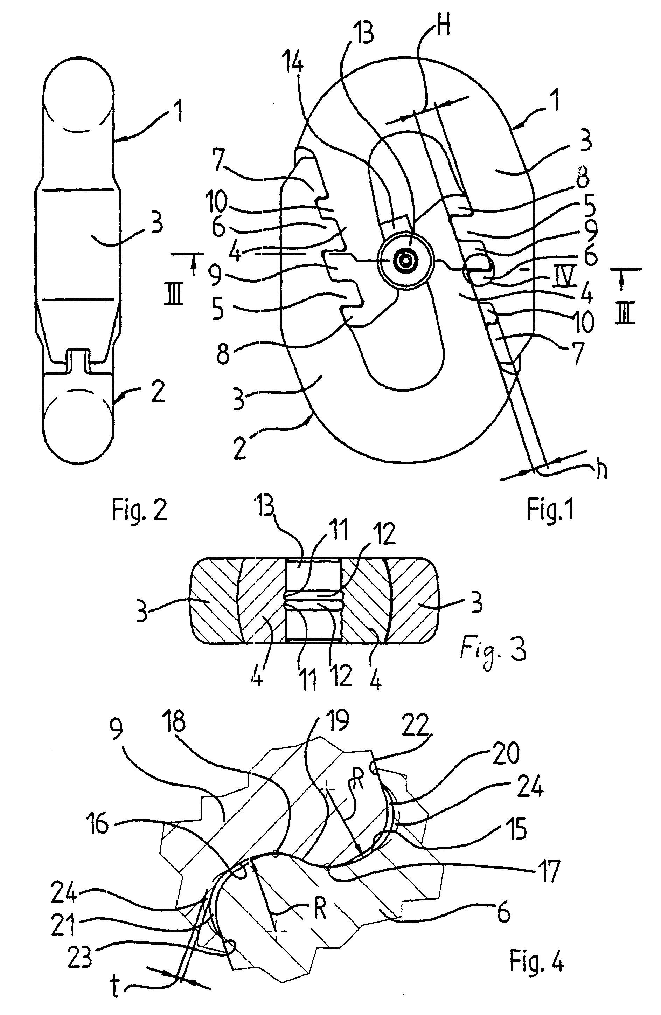

In Fig. 1 sind mit 1 und 2 zwei eine identische Form aufweisende, im wesentlichen U-förmige Schloßteile bezeichnet, von denen ein jedes einen Außenschenkel 3 und einen Innenschenkel 4 besitzt. Die Außenschenkel weisen drei Haltezähne 5,6 und 7 und die Innenschenkel drei Haltezähne 8,9 und 10 auf.

Die einander zugewandten Flächen der Innenschenkel 4 sind mit Rastausnehmungen 11 versehen, in die als Federringe ausgebildete Spreizelemente 12 einrasten können, durch die ein zylindrisches Stützelement 13 in der Verriegelungsstellung gehalten wird. Während des Einführens des Stützelementes 13 in seine Verriegelungsstellung können die Spreizelemente 12 in das Innere von Nuten des Stützelementes 13 eintauchen. 14 ist eine Drehsicherung des Stützelementes.

Zur zweckmäßigen Verteilung der vom Kettenschloß zu übertragenden Kräfte auf die Außen- und Innenschenkel 3,4 ist die Höhe H der Haltezähne 5,6,8,9 größer als die Höhe h der Haltezähne 7,10.

Wie aus Fig. 3 erkennbar, sind die den Innenschenkeln 4 zugewandten Flächen der Außenschenkel 3 konkav und die den Außenschenkeln 3 zugewandten Flächen der Innenschenkel 4 konvex ausgebildet.

In Fig. 4 sind in vergrößertem Maßstab die Anlageverhältnisse zwischen den Haltezähnen 6 und 9 dargestellt. Man erkennt, daß die Zahnflanken 15,16 lediglich längs einer zwischen den in Fig. 4 eingezeichneten kleinen Kreisen 17,18 gelegenen Stützzone 19 gegeneinander anliegen. Beidseits der Stützzone 19 sind Hohlräume 20,21 angeordnet. Die beschriebene Ausbildung der Zahnflanken 15, 16 bietet die Gewähr dafür, daß in das Kettenschloß eingeleitete Zugkräfte an einer genau definierten, günstigen Stelle übertragen werden. Im Bereich der Übergänge der Zahnflanken 15,16 in den jeweiligen Zahngrund 22 bzw. 23 ist jeweils eine Reihe von sich seitlich leicht überschneidenden, durch gestrichelte Linien angedeuteten Dellen 24 angeordnet.

Die Dellen 24 sind durch Eindrücken eines Werkzeuges mit einer als Druckstempel ausgebildeten Kuppe in den Zahngrund erzeugt. Durch die plastische Verformung des Zahngrundes im Bereich der Dellen 24 kommt es zum Aufbau von dauerhaften Druckspannungen. Bei einer Belastung des Kettenschlosses müssen die aufgrund der einwirkenden äußeren Kräfte entstehenden Zug-Normalspannungen zunächst diese Druckspannungen überwinden, ehe sie ein Ausmaß annehmen, das zu schädlicher Rißbildung führen kann. Durch die plastische Verformung des Zahngrundes wird eine erhebliche Steigerung der dynamischen Festigkeit des Kettenschlosses erreicht.

Die Dellen 24 haben vorzugsweise die Negativform eines Abschnittes eines Ellipsoiden, dessen Halbachsen im Falle eines kugelförmigen Werkzeuges gleich sein können. Darüber hinaus kommen aber auch pyramiden-, pyramidenstumpf-, kegel- oder kegelstumpfförmige Druckwerkzeuge zur Herstellung der Dellen 24 in Betracht. Die Tiefe t der von den Dellen 24 gebildeten Eindrücke sollte mindestens 2% und höchstens 20% des Radius R im Bereich des Überganges der Zahnflanken in den Zahngrund betragen und der kleinste Abstand zwischen den Zentren benachbarter Dellen in der Größenordnung von 5 bis 15 % dieses Radius R liegen.

Alle beschriebenen Maßnahmen, nämlich die Höhenabstimmung zwischen den Haltezähnen 5,6,8,9 einerseits und den Haltezähnen 7,10 andererseits, die gezielte Übertragung von Zugkräften längs begrenzter zentraler Bereiche der Haltezähne 5 bis 10 sowie die Oberflächenverfestigung im Bereich des Überganges der Flanken der Haltezähne 5 bis 10 in den Zahngrund führen im Sinne einer Optimierung zu einer deutlichen Erhöhung der Festigkeit des Kettenschlosses bei gleichzeitiger Reduzierung der Streuung der jeweiligen Festigkeitswerte.

## Patentansprüche

1. Kettenschloß für Gliederketten mit zwei lösbar miteinander verbundenen im wesentlichen U-förmigen Schloßteilen (1,2) die jeweils einen Inneschenkel (4) und einen mit diesem über ein Joch verbundenen Außenschenkel (3) aufweisen, wobei in der Schließstellung des Schlosses die einander zugewandten Seiten der Innen- und Außenschenkel durch jeweils drei Haltezahnpaare miteinander verbunden sind und im Bereich der kräftiger als die übrigen Haltezähne ausgebildeten Haltezähne (6,9) der mittleren Haltezahnpaare zwischen den einander zugewandten Seiten der Innenschenkel (4) ein Stütz- und Verriegelungselement (12,13) für die Schloßteile (1,2) angeordnet ist, wobei die Haltezähne (6,9) der mittleren Haltezahnpaare eine größere Höhe (H) als die Haltezähne (7,10) der im Bereich der Enden der Außenschenkel (3) angeordneten Haltezahnpaare haben und wobei zwischen den Flanken der jeweils miteinander in Eingriff stehenden Haltezähne eines jeden Haltezahnpaares beidseits einer sich über einen Teil der Höhe der Haltezähne erstreckenden zur Übertragung von Längskräften dienenden zentralen Stützzone (19) Hohlräume (20,21) vorgesehen sind, **dadurch gekennzeichnet,** daß auch die Haltezähne (5,8) der im Bereich der Enden der Innenschenkel (4) angeordneten Haltezahnpaare eine größere Höhe (H) als die Haltezähne (7,10) der im Bereich der Enden der Außenschenkel (3) angeordneten Haltezahnpaare haben und daß sich die zentrale Stützzone (19) höchstens über ein Drittel der Höhe der Haltezähne (5-10) erstreckt.

2. Kettenschloß nach Anspruch 1, **dadurch gekennzeichnet,** daß die zentralen Stützzonen (19) eine schwach S-förmige Kontur haben.

3. Kettenschloß nach Anspruch 1 oder 2, **dadurch gekennzeichnet,** daß die Zahnflanken (15,16) sich lediglich im Bereich der zentralen Stützzonen (19) berühren.

4. Kettenschloß nach einem oder mehreren der Ansprüche 1 bis 3, **dadurch gekennzeichnet,** daß die den Innenschenkeln (4) zugewandten Flächen der Außenschenkel (3) konkav sind und die den Außenschenkeln (3) zugewandten Flächen der Innenschenkel (4) konvex ausgebildet sind, oder **umgekehrt**.

5. Kettenschloß nach einem oder mehreren der Ansprüche 1 bis 4, **dadurch gekennzeichnet,** daß sämtliche Haltezähne (5-10) im Bereich des Überganges ihrer Zahnflanken (15,16) in den Zahnlückenbereich der Innen- und Außenschenkel (3,4) zwecks Oberflächenverfestigung mit Hilfe eines Druckwerkzeuges mit einem kugelförmigen Druckkopf plastisch verformt sind, wobei die durch den Druckkopf erzeugten, sich seitlich überlappenden Dellen (24)- einen Radius aufweisen, der 85 bis 95% des Zahngrundradius (R) beträgt.

6. Kettenschloß nach Anspruch 5, **dadurch gekennzeichnet,** daß der kleinste Abstand zwischen den Zentren der jeweils benachbarten Dellen (24) etwa 5 bis 15% des Zahngrundradius (R) beträgt.

7. Kettenschloß nach Anspruch 5 oder 6, **dadurch gekennzeichnet,** daß die Tiefe (t) der Dellen (24) mindestens 2% und höchstens 20% des Zahngrundradius (R) beträgt.

## Claims

1. Chain lock for link chains, having two essentially U-shaped lock parts (1,2) which are releasably connected to one another and each have an inner limb (4) and an outer limb (3) which is connected to the latter via a yoke, the mutually facing sides of the inner and outer limbs being connected to one another in each case by three pairs of holding teeth in the closed position of the lock and a supporting and locking element (12,13) for the lock parts (1,2) being arranged between the mutually facing sides of the inner limbs (4) in the region of the holding teeth (6,9) of the central pairs of holding teeth which are designed to be stronger than the rest of the holding teeth, with the holding teeth (6,9) of the central pairs of holding teeth having a greater height (H) than the holding teeth (7,10) of the pairs of holding teeth arranged in the region of the ends of the outer limbs (3) and while, between the flanks of the respective holding teeth of each pair of holding teeth engaged with one another, cavities (20,21) are provided on both sides of a central supporting zone (19) which extends over part of the height of the holding teeth and serves to transmit longitudinal forces, **characterized in that** also the holding teeth (5,8) of the pairs of holding teeth arranged in the region of the ends of the inner limbs (4) have a greater height (H) than the holding teeth (7,10) of the pairs of holding teeth arranged in the region of the ends of the outer limbs (3), and that the central supporting zone (19) extends at a maximum over a third of the height of the holding teeth (5-10).

2. Chain lock according to Claim 1, **characterized in that** the central supporting zones (19) have a slightly S-shaped contour.

3. Chain lock according to Claim 1 or 2, **characterized in that** the tooth flanks (15,16) are in contact only in the region of the central supporting zones (19).

4. Chain lock according to one or more of Claims 1 to 3, **characterized in that** the surfaces of the outer limbs (3) facing the inner limbs (4) are concave, and the surfaces of the inner limbs (4) facing the outer limbs (3) are of convex design or vice versa.

5. Chain lock according to one or more of Claims 1 to 4, **characterized in that** all the holding teeth (5-10) in the region of the transition from their tooth flanks (15,16) to the tooth interstice region of the inner and outer limbs (3,4) are plastically deformed with the aid of a pressing tool with a spherical pressing head for the purpose of surface reinforcement, the depressions (24) produced by the pressing head and overlapping laterally having a radius which is 85 to 95% of the tooth root radius (R).

6. Chain lock according to Claim 5, **characterized in that** the smallest distance between the centres of the respective adjacent depressions (24) is about 5 to 15% of the tooth root radius (R).

7. Chain lock according to Claim 5 or 6, **characterized in that** the depth (t) of the depressions (24) is at least 2% and at most 20% of the tooth root radius (R).

## Revendications

1. Joint de chaîne pour des chaînes à maillons, comportant deux parties de joint (1, 2) essentiellement en forme de U, reliées entre elles de façon amovible et qui comportent respectivement une branche intérieure (4) et une branche extérieure (3) reliée à la branche intérieure par l'intermédiaire d'un étrier, et dans lequel lorsque le joint est dans la position fermée, les côtés, qui se font face, des branches intérieure et extérieure sont reliés entre eux par respectivement trois paires de dents de retenue, et un élément d'appui et de verrouillage (12, 13) pour les parties (1, 2) du joint sont disposés entre les côtés, qui se font. face, des branches intérieures (4), dans la zone des dents de retenue (6, 9), qui sont agencées de manière à être plus robustes que les autres dents de retenue, des paires médianes de dents de retenue, les dents de retenue (6, 9) des paires médianes de dents de retenue possédant une hauteur (H) supérieure à celle des dents de retenue (7, 10) des paires de dents de retenue disposées dans la zone des extrémités des branches extérieures (3), et des cavités (20, 21) étant prévues entre les flancs des dents de retenue, qui engrènent respectivement entre elles, de chaque paire de dents de retenue des deux côtés d'une zone centrale d'appui (19) qui s'étend sur une partie de la hauteur des dents de retenue et sert à transmettre des forces longitudinales, **caractérisé en ce que** les dents de retenue (5, 8) des paires de dents de retenue, disposées dans la zone des extrémités des branches intérieures (4), possèdent également une hauteur (H) supérieure à celle des dents de retenue (7, 10) des paires de dents de retenue disposées dans la zone des extrémités des branches extérieures (3), et en ce que la zone centrale d'appui (19) s'étend au moins sur un tiers de la hauteur des dents de retenue (5-10).

2. Joint de chaîne selon la revendication 1, **caractérisé en ce que** les zones centrales d'appui (19) possèdent un contour en forme de S aplati.

3. Joint de chaîne selon la revendication 1 ou 2, **caractérisé en ce que** les flancs (15, 16) des dents se touchent uniquement au niveau des zones centrales d'appui (19).

4. Joint de chaîne selon une ou plusieurs des revendications 1 à 3, **caractérisé en ce que** les surfaces des branches extérieures (3) qui sont tournées vers les branches intérieures (4) sont concaves et les surfaces des branches intérieures (4) qui sont tournées vers les branches extérieures (3) sont convexes, ou inversement.

5. Joint de chaîne selon une ou plusieurs des revendications 1 à 4, **caractérisé en ce que** toutes les dents de retenue (5-10) sont déformées plastiquement, dans la zone de la jonction de leurs flancs (15, 16) au niveau des entre-dents des branches intérieure et extérieure (3, 4) pour le renforcement superficiel à l'aide d'un outil de compression comportant une tête de compression de forme sphérique, les parties enfoncées (24) formées par la tête de compression, qui se chevauchent latéralement, possédant un rayon qui est compris entre 85 et 95 % du rayon de base (R) des dents.

6. Joint de chaîne selon la revendication 5, **caractérisé en ce que** la plus petite distance entre les centres de chacune des parties enfoncées (24) voisines est comprise entre environ 5 et 15 % du rayon de base (R) des dents.

7. Joint de chaîne selon la revendication 5 ou 6, **caractérisé en ce que** la profondeur (t) des parties enfoncées (24) est égale au moins à 2 % et au plus à 20 % du rayon de base (R) des dents.
